# EUROPEAN PATENT APPLICATION

(11) **EP 4 477 685 A1**
(43) Date of publication of application: **18.12.2024**
(21) Application number: 23179536.0
(22) Date of filing: 15.06.2023
(51) Int. Cl.: C08G 59/40, C08G 59/50, C08G 59/56, C09J 7/35, C09J 163/00

(54) **HEAT-CURING EPOXY RESIN COMPOSITION SUITABLE FOR LOW CURING TEMPERATURE WITH GOOD STORAGE STABILITY**

(71) Applicant: Sika Technology AG, 6340 Baar (CH)
(72) Inventor: GABERELL, Fabio, 3280 Murten (CH); LEMPEREUR, Juliette, 8953 Dietikon (CH); KRÜGER, Christian, 8919 Rottenschwil (CH)
(74) Representative: Sika Patent Attorneys

(57) **Abstract**

The present invention relates to thermosetting epoxy resin compositions comprising, as curing agent, a dihydrazide, in combination with an imidazolium salt as an accelerator for the curing agent wherein the molar ratio of the curing agent to the accelerator is from 6 - 120. The compositions feature good storage stability and a low curing temperature. The epoxy resin compositions are especially suitable for use as bodywork adhesive.

## Description

### Technical field

The invention relates to the field of thermosetting one-component epoxy resin compositions, especially for use as bodywork adhesive.

### Prior art

Thermosetting epoxy resin compositions have long been known. Efforts have already been made for some time to remedy or at least significantly reduce the great disadvantage of epoxy resin compositions, namely their brittleness, the effect of which is that the cured epoxy resin composition cracks or is destroyed under impact stress. Attempts have already been made to do this by the addition of impact modifiers or by chemical modification of epoxy resins.

An important field of use of thermosetting epoxy resin compositions is in motor vehicle construction, especially in bonding in the bodywork. After the application of the epoxy resin composition, the bodywork is heated in the cathodic electrocoating oven, because of which the thermosetting epoxy resin composition is cured.

In order that rapid curing is possible, accelerators may be used alongside heat-activatable curing agents for epoxy resins. Examples of known categories of accelerators include latent imidazoles and amine-boron trifluoride complexes.

However, efforts are currently under way in the market to lower the temperature of the cathodic electrocoating ovens. Thus, there is a great need on the market for thermosetting epoxy resin compositions that cure even at relatively low temperatures, i.e. at a temperature of 130 to 140°C, even after a short time, typically 10 to 15 minutes. If, for example, aromatic ureas that are much more reactive owing to their structure are used for the purpose, this leads to major problems in the storage stability of the thermosetting epoxy resin compositions. There is therefore a need for thermosetting one-component epoxy resin compositions which on the one hand cure at lower temperatures but have sufficient storage stability.

### Summary of the invention

It is therefore an object of the present invention to provide storage stable thermosetting one-component epoxy resin compositions that have sufficient mechanical properties, especially lap shear strength and impact peal performance, after shorter curing times at lower temperatures, especially 10 minutes at 140°C.

This object was surprisingly achieved by a thermosetting one-component epoxy resin composition as claimed in claim 1. This epoxy resin composition has particularly good usability as a one-component thermosetting adhesive, especially as a thermosetting one-component bodywork adhesive in motor vehicle construction.

### Ways of executing the invention

The present invention relates to thermosetting one-component epoxy resin compositions comprising:
a) at least one epoxy resin A having an average of more than one epoxy group per molecule;
b) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2;** and
c) at least one accelerator **C** for the at least one curing agent **B,** which is an imidazolium salt of formula (V): 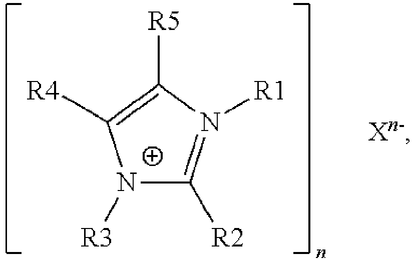
in which
R1 is an organic radical having 1 to 20 C atoms,
R2, R3, R4, and R5 are each an H atom or an organic radical having 1 to 20 C atoms,
X is an anion, and
n is 1, 2, or 3, preferably 1;

The imidazolium salt of formula (V) is selected from 1-Ethyl-3-methylimidazolium ethyl sulfate, 1-Ethyl-3-methylimidazolium diethyl phosphate, 1-Butyl-3-methylimidazolium chloride and 1-Ethyl-3-methylimidazolium acetate, most preferably 1-Ethyl-3-methylimidazolium ethyl sulfate.

The molar ratio of the at least one curing agent **B** for epoxy resins to the at least one accelerator **C (B/C)** is from 6 - 120, preferably 10 - 100, more preferably 12 - 75.

In this document, the use of the term "independently" in connection with substituents, radicals or groups should be interpreted such that the substituents, radicals or groups having the same designation in the same molecule may occur simultaneously with different meanings.

The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

A "primary hydroxyl group" refers to an OH group bonded to a carbon atom having two hydrogens.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The epoxy resin **A** having an average of more than one epoxy group per molecule is preferably a liquid epoxy resin or a solid epoxy resin. The term "solid epoxy resin" is very well known to a person skilled in the art of epoxies and is used in contrast to "liquid epoxy resins". The glass transition temperature of solid resins is above room temperature, meaning that they can be comminuted at room temperature to give free-flowing powders.

Preferred epoxy resins have the formula (II)

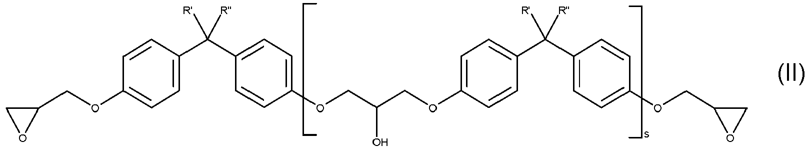

The substituents R' and R" here are independently either H or CH₃.

In solid epoxy resins, the index s has a value of > 1.5, especially of 2 to 12.

Such solid epoxy resins are commercially available, for example from Dow or Huntsman or Hexion.

Compounds of the formula (II) having an index s of 1 to 1.5 are referred to as semisolid epoxy resins by the person skilled in the art. For this present invention, they are likewise considered to be solid resins. However, preferred solid epoxy resins are epoxy resins in the narrower sense, i.e. where the index s has a value of > 1.5.

In liquid epoxy resins, the index s has a value of less than 1. Preferably, s has a value of less than 0.2.

Preference is thus given to diglycidyl ethers of bisphenol A (DGEBA), of bisphenol F, and of bisphenol A/F. Such liquid resins are available, for example, as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Further suitable epoxy resins A are what are called epoxy novolaks. More particularly, these are phenol or cresol epoxy novolaks.

Such epoxy resins are commercially available under the EPN or ECN and Tactix^{®} trade names from Huntsman or from the D.E.N.^{™} product series from Dow Chemical.

The epoxy resin **A** is preferably an epoxy resin of the formula (II), especially a liquid epoxy resin of the formula (II).

In a particularly preferred embodiment, the thermosetting one-component epoxy resin composition contains both at least one liquid epoxy resin of the formula (II) with s < 1, especially less than 0.2, and at least one solid epoxy resin of the formula (II) with s > 1.5, especially from 2 to 12.

The proportion of the epoxy resin **A** is preferably 10-60% by weight, more preferably 30-60% by weight, most preferably 40-55% by weight, based on the total weight of the thermosetting one-component epoxy resin composition.

It is further advantageous when 50-100% by weight, especially 80-100% by weight of the epoxy resin A is an aforementioned liquid epoxy resin.

It is further advantageous when 0-30% by weight, especially 0-20% by weight, more preferably 5-15% by weight, of the epoxy resin **A** is an aforementioned solid epoxy resin.

The composition of the invention also contains at least one curing agent **B** for epoxy resins. The curing agent **B** is a dihydrazide, which is preferably selected from the group consisting of aromatic dicarboxylic dihydrazide **B1** and aliphatic dicarboxylic dihydrazide **B2.**

If the curing agent **B** is an aromatic dicarboxylic dihydrazide **B1,** it is preferably selected from the group consisting of isophthalic dihydrazide and/or terephthalic dihydrazide, preferably isophthalic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts).

Preferably, the curing agent **B** is an aliphatic dicarboxylic dihydrazide **B2,** preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide).

Preference is given to adipic dihydrazide, 8,12-eicosadienedioic acid 1,20-dihydrazide (UDH) and 4-isopropyl-2,5-dioxoimidazolidine-1,3-di(propionohydrazide) (VDH). Most preferred is adipic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts)

The comparison of table 2 with table 3 shows that compositions containing aromatic dicarboxylic dihydrazide exhibit lower values for lap shear strength (LSS) than compositions containing aliphatic dicarboxylic dihydrazide. This is shown, for example, in the comparison of E5 with E1 or E7 with E2.

Preferably, the at least one curing agent **B** is present in the thermosetting epoxy resin composition in an amount that the molar ratio of curing agent **B** to epoxy resin **A** is from 300 - 550 mmol/mol, preferably 400 - 500 mmol/mol, more preferably 425 - 475 mmol/mol.

The ratio of the proportion of epoxy groups of the epoxy resin **A** in mol / sum total of curing agent **B1** and curing agent **B2** in mol **(A/(B1+B2))** is preferably 3-5, especially 3.5-4.5. This is advantageous in that, within this range, particularly advantageous values are obtained for mechanical properties, especially lap shear strength and impact peel of the cured composition.

It may further be advantageous when more than 80% by weight, preferably more than 90% by weight, especially more than 95% by weight, especially preferably more than 98% by weight, most preferably more than 99% by weight, based on the total weight of the thermosetting one-component epoxy resin composition, of molecules able to act as curing agents for epoxy resins at temperatures between 100-220°C, are the molecules of the curing agents **B1** and **B2.**

It is further advantageous when the thermosetting one-component epoxy resin composition includes a minimum amount of dicyandiamide. If the epoxy resin composition includes dicyandiamide, the weight ratio of the total amount of curing agent **B1** and curing agent **B2** to dicyandiamide ((**B1+B2**)/dicyandiamide) is ≥ 0.5, ≥ 0.75, ≥ 1, ≥ 2, ≥ 5, especially ≥ 10, preferably ≥ 50, more preferably ≥ 100.

The composition of the invention also contains at least one accelerator **C** for the at least one curing agent **B,** which is an imidazolium salt of formula (V): 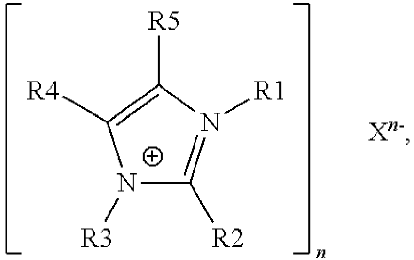 in which
R1 is an organic radical having 1 to 20 C atoms,
R2, R3, R4, and R5 are each an H atom or an organic radical having 1 to 20 C atoms,
X is an anion, and
n is 1, 2, or 3, preferably 1.

Preferably, the anion X is selected from the group consisting of alkylsulfates; alkylsulfonates; halides, more particularly chloride, bromide and iodide; thiocyanate; dicyanamide; carboxylates; phosphates, more particularly dimethylphosphate and diethylphosphate; and phosphonates.

More preferably, the anion X is selected from the group consisting of alkylsulfates; halides, more particularly chloride; carboxylates; phosphates; more particularly dimethylphosphates.

Even more preferably, the anion X is selected from alkylsulfonates.

Preferred alkylsulfates have the formula RₐOSO3⁻, where Rₐ is a C1 to C12 alkyl group or a C5 to C12 aryl group, preferably a C1-C6 alkyl group or a C6 aryl group, most preferred a C2 alkyl group (ethyl sulfate).

The comparison of table 3 with table 4 further shows that compositions containing C1 exhibit higher values for impact peel and lower increase in viscosity than compositions containing C2-C4. This is shown, for example, in the comparison of E5 with E9, E11 and E12.

Preferred halides are chloride.

Preferred phosphates are dialkylphosphates of the formula R_{b}R_{c}PO4⁻, where R_{b} and R_{c} independently of one another are a C1 to C6 alkyl group; more particularly R_{b} and R_{c} are the same alkyl group, most preferred dimethylphosphate and diethylphosphate, especially diethylphosphate.

Preferred carboxylates are carboxylates of the formula R_{d}COO⁻, where R_{d} is a C1 to C20 alkyl group or a C6 to C10 aryl or aralkyl group, preferably a C1-C8 alkyl group, more particularly acetate.

Particularly preferred anions X are selected from the group consisting of acetate, diethylphosphate, chloride and ethyl sulfate.

In formula (V) R1 and R3 are preferably, independently of one another, an organic radical having 1 to 10 C atoms. More particularly R1 and R3 are an aliphatic radical, more particularly an aliphatic radical without further heteroatoms, such as an alkyl group, for example. With particular preference R1 and R3 independently of one another are a C1 to C10 or a C1 to C4 alkyl group. Very preferably R1 is a methyl group and R3 is an ethyl group or R1 is a methyl group and R3 is an butyl group.

In formula (V) R2, R4, and R5, preferably independently, are an H atom or an organic radical having 1 to 10 C atoms; more particularly R2, R4, and R5 are an H atom or an aliphatic radical. With particular preference R2, R4, and R5, independently of one another, are an H atom or an alkyl group; more particularly, R2, R4, and R5, independently of one another, are an H atom or a C1 to C4 alkyl group. Very preferably R2, R4, and R5 are each an H atom. Preferably, n is 1.

X is preferably one of the abovementioned and preferred anions, very preferably selected from the group consisting of acetate, diethylphosphate, chloride and ethyl sulfate.

Most preferably, the imidazolium salts of formula (V) is selected from the list consisting of 1-Ethyl-3-methylimidazolium ethyl sulfate, 1-Ethyl-3-methylimidazolium diethyl phosphate, 1-Butyl-3-methylimidazolium chloride and 1-Ethyl-3-methylimidazolium acetate.

Suitable imidazolium salts of formula (V) are commercially available, for example, from BASF under the Basionics^{®} trade name.

The molar ratio of the at least one curing agent **B** for epoxy resins to the at least one accelerator **C (B/C)** is from 6 - 120, preferably 10 - 100, more preferably 12 - 75.

It can be seen from the results in table 2 that a molecular ratio **(B/C)** of more than 120 leads to insufficient values for lap shear strength. This is shown, for example, in the comparison of E1 and E2 with R5. Also, the results in table 3 exhibit that a molecular ratio **(B/C)** of more than 120 leads to insufficient values for lap shear strength. This is shown, for example, in the comparison of E1 and E2 with R5.

It can be further seen from the results in table 4 that a molecular ratio **(B/C)** of more than 120 leads to insufficient values for impact peel. This is shown, for example, in the comparison of E9-E10 with R10, E11 with R11 and E12 with R12.

Table 3 further shows that a molecular ratio **(B/C)** of less than 6 leads to a high viscosity increase. This is shown, for example, in the comparison of E3-E8 with R9.

It can be preferable if the molar ratio of the at least one curing agent B for epoxy resins to the at least one accelerator **C (B/C)** is from 12 - 25, preferably 14 - 20. This ratio is advantageous with respect to higher values for lap shear strength. This is shown, for example, in table 3 in the comparison of E6-E7 with E8 and E3-E5. This is also shown in table 1 in the comparison of E2 with E1.

It can be also preferable if the molar ratio of the at least one curing agent **B** for epoxy resins to the at least one accelerator **C (B/C)** is from 25 - 75, preferably 26 - 70, more preferably 40 - 70.

Such a ratio is advantageous with respect to a low increase in viscosity after storage. This is shown, for example, in table 3 in the comparison of E3-E5 with E6-E8.

The amount of dicyandiamide is preferably less than 5% by weight, less than 3% by weight, less than 2% by weight, especially less than 1% by weight, preferably less than 0.5% by weight, more preferably less than 0.3% by weight, most preferably less than 0.1% by weight, based on the total weight of the epoxy resin composition. More preferably, the thermosetting one-component epoxy resin composition does not include any dicyandiamide.

It is further preferred if the thermosetting one-component epoxy resin composition contains accelerators for epoxy resins other than the before mentioned at least one accelerator C in an amount of less than 0.5 % by weight, less than 0.1 % by weight, less than 0.05 % by weight, especially less than 0.01 % by weight, preferably less than 0.001 % by weight, based on the total weight of the epoxy resin composition. More preferably, the thermosetting one-component epoxy resin composition does not include any accelerators for epoxy resins other than the before mentioned at least one accelerator **C.** Such other accelerators for epoxy resins are preferably selected from the list consisting of substituted ureas, imidazoles and blocked amines

The amount of the accelerator **C** is advantageously 0.5 - 5.0% by weight, especially 0.75 - 3.0% by weight, preferably 1.0 - 2.0% by weight, based on the weight of the epoxy resin **A.**

It is further preferred if the at least one accelerator **C** is present in the one-component thermosetting epoxy resin composition in an amount that the molar ratio of accelerator **C** to epoxy resin **A** is from 5 - 95 mmol/mol, preferably 10-50 mmol/mol, more preferably 15 - 25 mmol/mol.

The ratio of the proportion of accelerator **C** in grams per mole of epoxy groups of the epoxy resin **A** is preferably 0.5 - 9.0 g/mol of epoxy groups, especially 0.75 - 7.0 g/mol of epoxy groups, more preferably 1.0 - 4.5 g/mol of epoxy groups, more preferably 1.5 - 3.0 g/mol of epoxy groups, most preferably 2.0 -2.5 g/mol of epoxy groups.

The one-component thermosetting epoxy resin composition preferably comprises at least one toughness improver **D.** The toughness improvers **D** may be solid or liquid.

More particularly, the toughness improver **D** is selected from the group consisting of terminally blocked polyurethane polymers **D1,** liquid rubbers **D2** and core-shell polymers **D3.** The toughness improver **D** is preferably selected from the group consisting of terminally blocked polyurethane polymers **D1** and liquid rubbers **D2.** Particular preference is given to a terminally blocked polyurethane polymer **D1.**

If the toughness improver **D** is a terminally blocked polyurethane prepolymer **D1.**

It is preferably a terminally blocked polyurethane polymer **D1** blocked with a blocking group that is eliminated at a temperature above 100°C.

Preferred blocking groups are especially firstly phenols or bisphenols. Preferred examples of such phenols and bisphenols are especially phenol, cresol, resorcinol, catechol, cardanol (3-pentadecenylphenol (from cashewnutshell oil)), nonylphenol, phenols that have been reacted with styrene or dicyclopentadiene, bisphenol A, bisphenol F and 2,2'-diallylbisphenol A.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used stoichiometrically or in a stoichiometric excess in order to ensure that all NCO groups have been converted.

The polyurethane prepolymer with isocyanate end groups can be prepared from at least one diisocyanate or triisocyanate and from a polymer **Q_{PM}** having terminal amino, thiol or hydroxyl groups and/or from an optionally substituted polyphenol **Q_{PP}**.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α□ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}**.

The polyurethane prepolymer having isocyanate end groups preferably has elastic character. It preferably exhibits a glass transition temperature Tg of less than 0°C.

The toughness improver D may be a liquid rubber **D2.** This may be, for example, a carboxy- or epoxy-terminated polymer.

In a first embodiment, this liquid rubber may be a carboxy- or epoxy-terminated acrylonitrile/butadiene copolymer or derivative thereof. Such liquid rubbers are commercially available, for example, under the Hypro / Hypox^{®} CTBN and CTBNX and ETBN name from Emerald Performance Materials. Suitable derivatives are especially elastomer-modified prepolymers having epoxy groups, as sold commercially under the Polydis^{®} product line, especially from the Polydis^{®} 36.. product line, by Struktol^{®} (Schill+Seilacher Gruppe, Germany) or under the Albipox product line (Evonik, Germany).

In a second embodiment, this liquid rubber may be a polyacrylate liquid rubber which is fully miscible with liquid epoxy resins and separates to form microdroplets only in the course of curing of the epoxy resin matrix. Such polyacrylate liquid rubbers are available, for example, under the 20208-XPA name from Dow.

It is of course also possible to use mixtures of liquid rubbers, especially mixtures of carboxy- or epoxy-terminated acrylonitrile/butadiene copolymers or derivatives thereof.

The toughness improver **D,** in a third embodiment, may be a core-shell polymer **D3.** Core-shell polymers consist of an elastic core polymer and a rigid shell polymer. Particularly suitable core-shell polymers consist of a core of elastic acrylate or butadiene polymer encased by a rigid shell of a rigid thermoplastic polymer. This core-shell structure either forms spontaneously as a result of separation of a block copolymer or is defined by the conduct of the polymerization as a latex or suspension polymerization with subsequent grafting. Preferred core-shell polymers are what are called MBS polymers, which are commercially available under the Clearstrength^{™} trade name from Arkema, Paraloid^{™} from Dow or F-351^{™} from Zeon.

Preferably, the proportion of toughness improver **D,** especially of terminally blocked polyurethane polymer **D1,** is 15-45% by weight, especially 20-40% by weight, especially 22.5-35% by weight, especially 25-35% by weight, more preferably 27.5-32.5% by weight, based on the total weight of the thermosetting one-component epoxy resin composition.

This is advantageous in that this gives high values for impact peel with simultaneously high values of lap shear strength.

In a further preferred embodiment, the composition additionally comprises at least one filler **F.** Preference is given here to mica, talc, kaolin, wollastonite, feldspar, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide and fumed silicas.

Advantageously, the total proportion of the overall filler **F** is 5-40% by weight, preferably 10-30% by weight, based on the total weight of the thermosetting one-component epoxy resin composition.

In a further preferred embodiment, the composition additionally comprises at least one epoxy-bearing reactive diluent **G.** Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of difunctional, saturated or unsaturated, branched or unbranched, cyclic or open-chain, C₂-C₃₀ alcohols, e.g. ethylene glycol glycidyl ether, butanediol glycidyl ether, hexanediol glycidyl ether, octanediol glycidyl ether, cyclohexanedimethanol diglycidyl ether, neopentyl glycol diglycidyl ether, and the like;
- glycidyl ethers of tri- or polyfunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;

- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;
- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to hexanediol diglycidyl ether, cresyl glycidyl ether, p-tert-butylphenyl glycidyl ether, polypropylene glycol diglycidyl ether and polyethylene glycol diglycidyl ether.

Advantageously, the total proportion of the epoxy-bearing reactive diluent G is 0.1-15% by weight, preferably 0.1-5% by weight, especially preferably 0.1-2% by weight, more preferably 0.2-1% by weight, based on the total weight of the thermosetting one-component epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable plasticizers are especially phenol alkylsulfonates or N-butylbenzamide, as commercially available as Mesamoll^{®} or Dellatol BBS from Bayer.

Suitable stabilizers are especially optionally substituted phenols such as BHT or Wingstay^{®} T (Elkem), sterically hindered amines or N-oxyl compounds such as TEMPO (Evonik).

A particularly preferred one-component epoxy resin composition comprises:
- 10-60% by weight, especially 30-60% by weight, based on the total weight of the epoxy resin composition, of epoxy resin **A** having an average of more than one epoxy group per molecule; preferably 50-100% by weight, especially 80-100% by weight, of the epoxy resin **A** is a liquid epoxy resin and 0-30% by weight, especially 0-20% by weight, of the epoxy resin **A** is a solid epoxy resin;
- at least one curing agent **B** for epoxy resins, where the curing agent **B** is a dihydrazide, preferably selected from the group consisting of aromatic dicarboxylic dihydrazide **B1,** preferably isophthalic dihydrazide and aliphatic dicarboxylic dihydrazide **B2,** preferably adipic dihydrazide;
- at least one accelerator **C** for the at least one curing agent **B,** which is an imidazolium salt of formula (V): 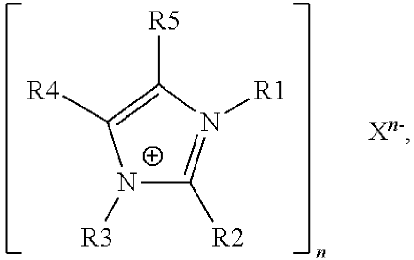 in which
   R1 is an organic radical having 1 to 20 C atoms,
   R2, R3, R4, and R5 are each an H atom or an organic radical having 1 to 20 C atoms,
   X is an anion, and
   n is 1, 2, or 3, preferably 1;
   preferably, the imidazolium salt of formula (V) is selected from 1-Ethyl-3-methylimidazolium ethyl sulfate, 1-Ethyl-3-methylimidazolium diethyl phosphate, 1-Butyl-3-methylimidazolium chloride and 1-Ethyl-3-methylimidazolium acetate, most preferably 1-Ethyl-3-methylimidazolium ethyl sulfate;
- preferably 15-45% by weight, especially 20-40% by weight, based on the total weight of the thermosetting one-component epoxy resin composition, of at least one toughness improver **D** which is selected from the group consisting of terminally blocked polyurethane polymers **D1,** liquid rubbers **D2** and core-shell polymers **D3,** preferably terminally blocked polyurethane polymers **D1;**
- preferably 5-40% by weight, preferably 10-30% by weight, based on the total weight of the thermosetting one-component epoxy resin composition, of a filler **F** selected from the group consisting of calcium carbonate, calcium oxide and fumed silicas;
- preferably 0.1-15% by weight, preferably 0.1-5% by weight, especially preferably 0.1-2% by weight, more preferably 0.2-1% by weight, based on the total weight of the thermosetting one-component epoxy resin composition, of an epoxy-bearing reactive diluent **G.**

The anion **X** of the imidazolium salt of formula (V) is selected from the group consisting of selected from the group consisting of alkylsulfates; halides, more particularly chloride; carboxylates; phosphates, more particularly dimethylphosphates; most preferably alkylsulfonates.

In formula (V), R1 is a methyl group and R3 is an ethyl group or R1 is a methyl group and R3 is an butyl group, preferably R1 is a methyl group and R3 is an ethyl group. In both cases, R2, R4, and R5 are each an H atom and n is 1.

The molar ratio of the at least one curing agent **B** for epoxy resins to the at least one accelerator **C (B/C)** is from 6 - 120, preferably 10 - 100, more preferably 12 - 75.

The at least one accelerator **C** is present in the one-component thermosetting epoxy resin composition in an amount that the molar ratio of accelerator C to epoxy resin **A** is from 5 - 95 mmol/mol, preferably 10 - 50 mmol/mol, more preferably 15-25 mmol/mol.

The at least one curing agent **B** is present in the thermosetting epoxy resin composition in an amount that the molar ratio of curing agent **B** to epoxy resin **A** is from 300 - 550 mmol/mol, preferably 400 - 500 mmol/mol, more preferably 425 - 475 mmol/mol.

It may further be advantageous when the preferred one-component epoxy resin composition consists of the aforementioned constituents to an extent of more than 80% by weight, preferably more than 90% by weight, especially more than 95% by weight, especially preferably more than 98% by weight, most preferably more than 99% by weight, based on the total weight of the epoxy resin composition.

It is advantageous when the epoxy resin composition of the invention has a viscosity at 25°C of 500-4500 Pa*s, especially 1000-3000 Pa*s, preferably 1500-2500 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinc-coated steel, and post-phosphated steel, and also aluminum, especially in the variants which typically occur in automobile construction.

A further aspect of the present invention relates to a process for the bonding of heat-stable substrates, which comprises the stages:
i) applying a thermosetting one-component epoxy resin composition as described in detail above to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 150°C, more preferably between 130 and 140°C.

The substrate **S2** consists here of the same material as or a different material from the substrate **S1.** The substrates **S1** and/or **S2** are in particular the aforementioned metals and plastics.

Preferably, in step iii), the composition is heated to a temperature of 100-220°C, especially of 120-200°C, preferably between 130 and 150°C, more preferably between 130 and 140°C, and the composition is left at the aforementioned temperature for 10 min - 6 h, 10 min - 2 h, 10 min - 60 min, 10 min - 30 min, 10 min - 20 min, more preferably 10 min - 15 min.

Such a method of bonding heat-stable materials results in an adhesive-bonded article. Such an article is preferably a vehicle or part of a vehicle.

A further aspect of the present invention accordingly relates to an adhesive-bonded article obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of a composition according to the invention are used at temperatures between typically 120°C and -40°C, preferably between 100°C and -40°C, in particular between 80°C and -40°C.

A particularly preferred use of the thermosetting one-component epoxy resin composition of the invention is the use thereof as a thermosetting one-component bodywork adhesive in motor vehicle construction or as a stiffening compound or as a foamable, thermosetting composition for the reinforcement of voids in structural components and reinforcing elements.

A further aspect of the present invention relates to a cured epoxy resin composition as obtained by heating a thermosetting one-component epoxy resin composition as described in detail above.

It has been found that accelerators C of the invention as already described in detail above as a constituent of a thermosetting epoxy resin composition are suitable in combination with the curing agents B of the invention as accelerators for thermosetting epoxy resin compositions at curing temperatures especially between 130 and 150°C.

More preferably, the compositions of the invention have the following properties:

### After curing for 10 minutes at 140°C:

- LSS, measured as described in the experimental, of > 27.5 MPa, especially ≥ 28 MPa, especially ≥ 28.5 MPa, especially ≥ 29 MPa, more preferably ≥ 30 MPa;
- IP, measured as described in the experimental, of ≥ 29 N/mm, especially ≥ 30 N/mm, especially ≥ 31 N/mm, more preferably ≥ 32 N/mm.

### Examples

Some examples which further illustrate the invention, but which are not intended to restrict the scope of the invention in any way, are cited below.

### Preparation of a toughness improver ("D-1")

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver ***D*-*1*.**

**Raw materials used.**

| | |
|---|---|
| A | liquid epoxy resin, D.E.R. 331 (bisphenol A diglycidyl ether), Dow |
| E | tert-Butylphenyl-glycidylether, Polypox R7, |
| B1 | adipic dihydrazide (ADH), CAS: 1071-93-8, Technicure ADH-J (median particle size D₅₀ of 2.4 µm), A&C Catalysts Inc., Mw: 174.20 g/mol |
| B2 | isophthalic dihydrazide (IDH), CAS: 2760-98-7, Mw: 194.194 g/mol |
| C1 | Basionics LQ 01, 1-Ethyl-3-methylimidazolium ethyl sulfate, BASF, Mw: 236.29 g/mol |
| C2 | 1-Ethyl-3-methylimidazolium diethyl phosphate, Sigma Aldrich, Mw: 264.26 g/mol |
| C3 | 1-Butyl-3-methylimidazolium chlorid, Sigma Aldrich, Mw: 174.67 g/mol |
| C4 | 1-Ethyl-3-methylimidazolium acetate, Sigma Aldrich, Mw: 170.21 g/mol |
| F1 | Corrosion protection particles |
| F2 | Wollastonit |
| F3 | Calcium oxide |
| F4 | Pyrogenic silica |
| | Poly-THF 2000 (difunctional polybutylene glycol) (OH equivalent weight = about 1000 g/OH equivalent), BASF |
| | Liquiflex H (hydroxyl-terminated polybutadiene) (OH equivalent weight = about 1230 g/OH equivalent), Krahn |
| | Isophorone diisocyanate (= *"IPDI"),* Evonik |
| | Cardolite NC-700 (cardanol, meta-substituted alkenylmonophenol), Cardolite |

### Production of the compositions

The reference compositions R1-R12 and the inventive compositions E1 to E12 were produced according to the compositions in table 2-4. The stated amounts in table 2-4 are in parts by weight.

The molar ratio of the at least one curing agent **B** for epoxy resins to the at least one accelerator **C (B/C)** is shown as "MR (B/C)" in table 2-4.

### Test methods:

### Lap shear strength (LSS) (DIN EN 1465)

Cleaned test specimens of Elo H420 steel (thickness 1.2 mm) that had been reoiled with Anticorit PL 3802-39S (3g / m²) were bonded with the adhesive over a bonding area of 25 x 10 mm with glass beads as spacer in a layer thickness of 0.3 mm, and cured at object temperature 140°C for 10 min.

Lap shear strength was determined on a tensile tester at a strain rate of 10 mm/min in a triple determination to DIN EN 1465.

### impact peel strength (IP RT) (to ISO 11343)

The specimens were produced with the adhesive and DC04+ZE steel with dimensions of 90 x 20 x 0.8 mm that had been reoiled with Anticorit PL 3802-39S (3g / m²). The bonding area here was 20 x 30 mm at a layer thickness of 0.3 mm with glass beads as spacer. The samples were cured for 10 minutes at object temperature 140°C. Impact peel strength was measured at 23°C as a triple determination on a Zwick 450 impact pendulum. The impact peel strength reported is the average force in N/mm under the measurement curve from 25% to 90% to ISO11343.

### Viscosity/storage stability of adhesives

For assessment of the storage stability of the adhesives, the viscosity measurement was repeated after storage for 1 week at 50°C, and the percentage rise in viscosity that results after the storage was ascertained. The increase in viscosity in % is displayed in table 3 and 4 under " Visco increase " in percentage. All the compositions had a viscosity of 1500-2500 Pa*s at the beginning of the viscosity measurement. The viscosity was determined by a rheometer in oscillation using a plate-plate geometry with the following parameters: 5 Hz, measurement gap 1 mm, plate-plate diameter 25 mm, 1% deformation.

**Table 2, n.c. = not cured**

| | **R1** | **R2** | **R3** | **R4** | **R5** | **E1** | **E2** |
|---|---|---|---|---|---|---|---|
| A | 44 | 44 | 44 | 44 | 44 | 44 | 44 |
| E | 0.5 | 0.5 | 0.5 | 0.5 | 0.5 | 0.5 | 0.5 |
| D1 | 22 | 22 | 22 | 22 | 22 | 22 | 22 |
| B1 | 10 | | | | | | |
| B2 | | 11.3 | | | 11.3 | 11.3 | 11.3 |
| C1 | | | 0.5 | 2 | 0.1 | 0.5 | 1 |
| F1 | 3 | 3 | 3 | 3 | 3 | 3 | 3 |
| F2 | 5 | 5 | 5 | 5 | 5 | 5 | 5 |
| F3 | 4.5 | 4.5 | 4.5 | 4.5 | 4.5 | 4.5 | 4.5 |
| F4 | 7.5 | 7.5 | 7.5 | 7.5 | 7.5 | 7.5 | 7.5 |
| Total (wt.-%): | 96.5 | 97.8 | 87 | 88.5 | 97.9 | 98.3 | 98.8 |
| mMol B1 | 0.59 | 0.00 | 0.00 | 0.00 | 0.00 | 0.00 | 0.00 |
| mMol B2 | 0.00 | 0.59 | 0.00 | 0.00 | 0.59 | 0.59 | 0.59 |
| mMol C1 | 0.000 | 0.000 | 0.024 | 0.096 | 0.004 | 0.022 | 0.043 |
| MR (B/C) | - | - | - | - | 137 | 27 | 14 |
| B index | 4 | 4 | - | - | 4 | 4 | 4 |
| C index | - | - | 2.16 | 8.64 | 0.43 | 2.16 | 4.32 |
| LSS (10' 140°C) [MPa] | n.c. | n.c. | n.c. | n.c. | n.c. | 1.2 | 4.6 |

**Table 3**

| | **R6** | **R7** | **R8** | **E3** | **E4** | **E5** | **E6** | **E7** | **E8** | **R9** |
|---|---|---|---|---|---|---|---|---|---|---|
| A | 44 | 44 | 44 | 44 | 44 | 44 | 44 | 44 | 44 | 44 |
| E | 0.5 | 0.5 | 0.5 | 0.5 | 0.5 | 0.5 | 0.5 | 0.5 | 0.5 | 0.5 |
| D1 | 22 | 22 | 22 | 22 | 22 | 22 | 22 | 22 | 22 | 22 |
| B1 | 10 | 10 | 10 | 10 | 10 | 10 | 10 | 10 | 10 | 10 |
| C1 | 0.01 | 0.02 | 0.1 | 0.2 | 0.3 | 0.5 | 0.75 | 1 | 2 | 3 |
| F1 | 3 | 3 | 3 | 3 | 3 | 3 | 3 | 3 | 3 | 3 |
| F2 | 5 | 5 | 5 | 5 | 5 | 5 | 5 | 5 | 5 | 5 |
| F3 | 4.5 | 4.5 | 4.5 | 4.5 | 4.5 | 4.5 | 4.5 | 4.5 | 4.5 | 4.5 |
| F4 | 7.5 | 7.5 | 7.5 | 7.5 | 7.5 | 7.5 | 7.5 | 7.5 | 7.5 | 7.5 |
| Total (wt.-%): | 96.51 | 96.52 | 96.6 | 96.7 | 96.8 | 97 | 97.25 | 97.5 | 98.5 | 99.5 |
| mMol B1 | 0.59 | 0.59 | 0.59 | 0.59 | 0.59 | 0.59 | 0.59 | 0.59 | 0.58 | 0.58 |
| mMol C1 | 0.000 | 0.001 | 0.004 | 0.009 | 0.013 | 0.022 | 0.033 | 0.043 | 0.086 | 0.128 |
| MR (B/C) | 1356 | 678 | 136 | 68 | 45 | 27 | 18 | 14 | 7 | 5 |
| LSS (10' 140°C) [MPa] | 20.9 | n.d. | 22.9 | 28.2 | 29.8 | 28.8 | 30.6 | 30.3 | 29.8 | 27.1 |
| IP RT (10' 140°C) [MPa] | 21.8 | n.d. | 28.6 | 30.9 | 29.8 | 32.0 | 31.2 | 30.4 | 32.6 | 27.5 |
| Visco increase [%] | 12 | 15 | 16 | 37 | 34 | 32 | 47 | 51 | 100 | >100 |

**Table 4, n.d. = not determined**

| | **R10** | **E9** | **E10** | **R11** | **E11** | **R12** | **E12** |
|---|---|---|---|---|---|---|---|
| A | 44 | 44 | 44 | 44 | 44 | 44 | 44 |
| E | 0.5 | 0.5 | 0.5 | 0.5 | 0.5 | 0.5 | 0.5 |
| D1 | 22 | 22 | 22 | 22 | 22 | 22 | 22 |
| B1 | 10 | 10 | 10 | 10 | 10 | 10 | 10 |
| C2 | 0.01 | 0.5 | 2 | | | | |
| C3 | | | | 0.01 | 0.5 | | |
| C4 | | | | | | 0.01 | 0.5 |
| F1 | 3 | 3 | 3 | 3 | 3 | 3 | 3 |
| F2 | 5 | 5 | 5 | 5 | 5 | 5 | 5 |
| F3 | 4.5 | 4.5 | 4.5 | 4.5 | 4.5 | 4.5 | 4.5 |
| F4 | 7.5 | 7.5 | 7.5 | 7.5 | 7.5 | 7.5 | 7.5 |
| Total (wt.-%): | 96.51 | 97 | 98.5 | 96.51 | 97 | 96.51 | 97 |
| mMol B1 | 0.59 | 0.59 | 0.58 | 0.59 | 0.59 | 0.59 | 0.59 |
| mMol C2 | 0.001 | 0.020 | 0.077 | 0.000 | 0.000 | 0.000 | 0.000 |
| mMol C3 | 0.000 | 0.000 | 0.000 | 0.001 | 0.030 | 0.000 | 0.000 |
| mMol C4 | 0.000 | 0.000 | 0.000 | 0.000 | 0.000 | 0.001 | 0.030 |
| MR (B/C) | 1517 | 30 | 8 | 1003 | 20 | 977 | 20 |
| IP RT (10' 140°C) [MPa] | 21 | 31 | 29 | 22 | 30 | 23 | 28 |
| Visco increase [%] | n.d. | n.d. | n.d. | 12 | 100 | 13 | 100 |

## Claims

1. A thermosetting one-component epoxy resin composition comprising
a) at least one epoxy resin **A** having an average of more than one epoxy group per molecule;
b) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2;** and
c) at least one accelerator **C** for the at least one curing agent **B,** which is an imidazolium salt of formula (V): 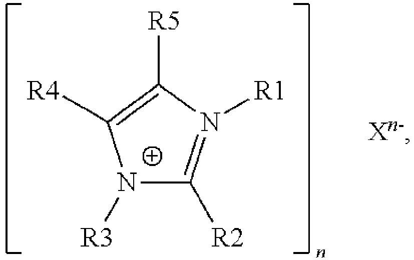
in which
R1 is an organic radical having 1 to 20 C atoms,
R2, R3, R4, and R5 are each an H atom or an organic radical having 1 to 20 C atoms,
X is an anion, and
n is 1, 2, or 3, preferably 1;
preferably, the imidazolium salt of formula (V) is selected from 1-Ethyl-3-methylimidazolium ethyl sulfate, 1-Ethyl-3-methylimidazolium diethyl phosphate, 1-Butyl-3-methylimidazolium chloride and 1-Ethyl-3-methylimidazolium acetate, most preferably 1-Ethyl-3-methylimidazolium ethyl sulfate, wherein the molar ratio of the at least one curing agent **B** for epoxy resins to the at least one accelerator **C (B/C)** is from 6 - 120, preferably 10 - 100, more preferably 12 - 75.

2. The thermosetting one-component epoxy resin composition as claimed in claim 1, **characterized in that** the curing agent **B** is an aromatic dicarboxylic dihydrazide **B1,** preferably selected from the group consisting of isophthalic dihydrazide and/or terephthalic dihydrazide, preferably isophthalic dihydrazide.

3. The thermosetting one-component epoxy resin composition as claimed in any of the preceding claims, **characterized in that** the curing agent **B** is an aliphatic dicarboxylic dihydrazide **B2,** preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide), especially adipic dihydrazide.

4. The thermosetting one-component epoxy resin composition as claimed in any of the preceding claims, **characterized in that** the anion X of the imidazolium salt of formula (V) is selected from the group consisting of alkylsulfates; alkylsulfonates; halides, more particularly chloride, bromide and iodide; thiocyanate; dicyanamide; carboxylates; phosphates, more particularly dimethylphosphate and diethylphosphate; and phosphonates; preferably selected from the group consisting of alkylsulfates; halides, more particularly chloride; carboxylates; phosphates, more particularly dimethylphosphates; most preferably alkylsulfonates.

5. The thermosetting one-component epoxy resin composition as claimed in any of the preceding claims, **characterized in that** in formula (V) R1 is a methyl group and R3 is an ethyl group or R1 is a methyl group and R3 is an butyl group, preferably R1 is a methyl group and R3 is an ethyl group, and further **characterized in that** R2, R4, and R5 are each an H atom and n being 1.

6. The thermosetting one-component epoxy resin composition as claimed in any of the preceding claims, **characterized in that** the molar ratio of the at least one curing agent **B** for epoxy resins to the at least one accelerator **C (B/C)** is from 12 - 25, preferably 14 - 20.

7. The thermosetting one-component epoxy resin composition as claimed in any of the claims 1 - 5, **characterized in that** the molar ratio of the at least one curing agent **B** for epoxy resins to the at least one accelerator **C (B/C)** is from 25 - 75, preferably 26 - 70, more preferably 40 - 70.

8. The thermosetting one-component epoxy resin composition as claimed in any of the preceding claims, **characterized in that** the at least one accelerator C is present in the one-component thermosetting epoxy resin composition in an amount that the molar ratio of accelerator **C** to epoxy resin **A** is from 5 - 95 mmol/mol, preferably 10 - 50 mmol/mol, more preferably 15 - 25 mmol/mol.

9. The thermosetting one-component epoxy resin composition as claimed in any of the preceding claims, **characterized in that** the at least one curing agent **B** is present in the thermosetting epoxy resin composition in an amount that the molar ratio of curing agent **B** to epoxy resin **A** is from 300 - 550 mmol/mol, preferably 400 - 500 mmol/mol, more preferably 425 - 475 mmol/mol.

10. The thermosetting one-component epoxy resin composition as claimed in any of the preceding claims, **characterized in that** the thermosetting epoxy resin composition additionally includes at least one toughness improver **D** selected from the group consisting of terminally blocked polyurethane polymers **D1,** liquid rubbers **D2** and core-shell polymers **D3,** preferably a terminally blocked polyurethane polymer **D1.**

11. The thermosetting one-component epoxy resin composition as claimed in any of the preceding claims, **characterized in that** the proportion of the epoxy resin **A** is 10-60% by weight, preferably 30-60% by weight, more preferably 40-55% by weight, based on the total weight of the one-component epoxy resin composition.

12. The thermosetting one-component epoxy resin composition as claimed in any of the preceding claims, **characterized in that** the epoxy resin composition has a viscosity at 25°C of 500-4500 Pa*s, especially 1000-3000 Pa*s, preferably 1500-2500 Pa*s, preferably measured with a rheometer in oscillation using a plate-plate geometry with the following parameters: 5 Hz, measurement gap 1 mm, plate-plate diameter 25 mm, 1% deformation.

13. The use of a thermosetting one-component epoxy resin composition as claimed in any of claims 1 to 12 as one-component thermosetting adhesive, especially as thermosetting one-component bodywork adhesive in motor vehicle construction.

14. A process for the adhesive bonding of heat-stable substrates, comprising the stages of:
i) applying a thermosetting one-component epoxy resin composition as claimed in any of claims 1 to 12 to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 150°C, more preferably between 130 and 140°C;
in which the substrate **S2** consists of the same material as or a different material from the substrate **S1.**

15. The process as claimed in claim 14, wherein, in step iii) of heating the composition to a temperature of 100-220°C, especially of 120-200°C, preferably between 130 and 150°C, more preferably between 130 and 140°C, the composition is left at the aforementioned temperature for 10 min - 6 h, 10 min - 2 h, 10 min - 60 min, 10 min - 30 min, 10 min - 20 min, more preferably 10 min - 15 min.

16. An adhesive-bonded article obtained from a process as claimed in one of claims 14 to 15.
